**Europäisches Patentamt**

**European Patent Office**

**Office européen des brevets**

(19)

(11) Veröffentlichungsnummer: **0 098 351**
**B1**

(12)

# EUROPÄISCHE PATENTSCHRIFT

(45) Veröffentlichungstag der Patentschrift:
03.06.87

(51) Int. Cl.⁴: **B 29 C 49/24**

(21) Anmeldenummer: 83103704.9

(22) Anmeldetag: 16.04.83

(54) Verfahren zum Anbringen eines blattförmigen Gegenstandes, z.B. einer Etikette, auf einen Hohlkörper aus Kunststoff, sowie Vorrichtung zur Durchführung des Verfahrens.

(30) Priorität: 06.07.82 CH 4103/82

(43) Veröffentlichungstag der Anmeldung:
18.01.84 Patentblatt 84/3

(45) Bekanntmachung des Hinweises auf die Patenterteilung:
03.06.87 Patentblatt 87/23

(84) Benannte Vertragsstaaten:
AT BE CH DE FR GB IT LI LU NL SE

(56) Entgegenhaltungen:
DE - A - 2 135 406
DE - C - 1 786 133
US - A - 2 792 593

(73) Patentinhaber: SOPLAR SA, Transportstrasse 3,
CH-9450 Altstätten (CH)

(72) Erfinder: Alwin, Lehner, Allmendstrasse 81, A-6971 Hard
(AT)

(74) Vertreter: Riederer, Conrad A., Dr., Bahnhofstrasse 10,
CH-7310 Bad Ragaz (CH)

## Beschreibung

Die Erfindung betrifft ein Verfahren zum Anbringen eines Gegenstandes auf einen Hohlkörper aus Kunststoff, bei welchem Verfahren der Gegenstand am Rohling für den zu blasenden Hohlkörper angebracht wird, bevor dieser in die Blasform eingeführt wird.

Es ist bekannt, bei der Herstellung von Hohlkörper, z.B. Flaschen, Dosen und anderen Gegenständen, aus thermoplastischem Kunststoff eine Beschriftung durch entsprechende Erhöhungen oder Vertiefungen in der Oberfläche anzubringen. Zu diesem Zwecke enthält die Blasform eine entsprechende Gravur. Nachteilig ist jedoch, dass eine solche Beschriftung nicht gut leserlich ist, weil Helligkeits- oder Farbkontraste fehlen. Um diesem Nachteil abzuhelfen, werden Hohlkörper auch vielfach nach dem Blasen bedruckt. Dies bedingt aber ausser dem Drucken noch werkstoffbedingte Sonderoperationen, wie Beflammen der Behälter vor dem Drucken, damit sie die Druckfarbe annehmen, und nachfolgende Trockentunneldurchläufe. Das Bedrucken ist daher relativ kostspielig und hat zudem den Nachteil, dass beim Aufheizen eine Schrumpfung der Behälter auftreten kann. Auch ist der Platzaufwand relativ gross.

Es ist auch bekannt, die Behälter nach dem Blasen oder nach dem Füllvorgang zu etikettieren. In diesem Falle werden vielfach hohe Anforderungen an die genaue Ausformung der Etikettierfläche am Behälter gestellt. Bereits diese Anforderungen können zu einem höheren Gestehungspreis des Behälters führen. Nachteilig sind auch durch etwaige Störungen an der Etikettiermaschine entstehende Zeitausfälle. Vielfach wird nämlich die Etikettierung an einer Füllstrasse vorgenommen, so dass eine Störung bei der Etikettierung die ganze Produktionslinie stoppt.

Es ist zwar auch bekannt, das Auftragen einer Etikette oder einer bebilderten Kunststoffolie innerhalb der Blasform vorzunehmen (DE-A-1 812 286). Dies stellt jedoch hohe Ansprüche an den Formenbau und ist nur innerhalb von relativ engen räumlichen Grenzen, d.h. nur auf gewissen Auftrag- oder Etikettierflächen, möglich, weil in dem Formnest ein Fenster für das Einbringen der Etikette notwendig ist. Auch muss der Platzbedarf für die dazu erforderliche Mechanik berücksichtigt werden. Nachteilig ist ferner, dass bei der Anbringung der Etikette die für die Blaszykluszeit massgebende Kühlzeit erhöht wird. Die Kühlkanäle können nämlich wegen des Fensters nicht mehr optimal geführt werden, so dass in der Regel die Abkühlzeit länger wird. Dies macht sich in einer Erhöhung der Produktionskosten bemerkbar. Dazu tragen auch die erhöhten Werkzeugkosten für ein Werkzeug mit Etikettierfenster bei. Weiter ist nachteilig, dass eine wirtschaftliche Fertigung mittels Formen mit mehreren Nestern nebeneinander kaum möglich ist.

Durch die DE-A-2 135 406 ist ein Verfahren gemäss dem Oberbegriff des Anspruchs 1 bekannt geworden, bei dem ein Umgebungstemperatur aufweisender Vorformling vor dem Verformen mit einer dünnwandigen Hülle aus streckbarem thermoplastischem Kunststoff umgeben wird, welche ein verkleinertes Druckbild trägt. Die dünnwandige Hülle wird durch eine Wickelvorrichtung aus einer etwa dreifach streckbaren Polystyrol- oder Polyäthylenfolie geformt und dann auf den Vorformling gesteckt. Hierauf wird dieser zusammen mit der Hülle in einen Ofen gebracht und auf eine Temperatur erwärmt, die im thermoelastischen Bereich des Vorformlings und der Hülle liegt. Nach seiner Einführung in die Blasform wird Druckluft in den Vorformling eingeleitet, um diesen zu einer Flasche aufzublasen. Dabei streckt sich auch die Hülse, so dass das Druckbild zu der vorgeplanten Grösse vergrössert wird. Nachteilig ist bei diesem Verfahren jedoch, dass immer mit gewissen Verzerrungen des Bildes zu rechnen ist. Darauf wird bereits in der das beschriebene Verfahren offenbarende Literaturstelle hingewiesen. Von Nachteil ist aber insbesondere, dass die Hülle nur auf einen kalten Vorformling aufgesteckt werden kann. Es ist nämlich praktisch unmöglich, eine dünnwandige Hülle auf einen heissen, noch klebrigen Vorformling zu schieben. Wenn aber zum Aufstecken der Vorformling kalt sein muss, ist ein Abkühlvorgang und ein neuer Aufheizvorgang notwendig. Dies stellt nicht nur eine Komplizierung der Herstellung der Flasche dar, sondern erfordert auch einen erhöhten Energiebedarf. Schliesslich ist auch von grossem Nachteil, dass beim vorbekannten Verfahren keine blattförmigen Etiketten verwendbar sind, sondern lediglich hülsenförmige, welche die ganze Flasche umgeben. Zur Herstellung einer hülsenförmigen Etikette ist zusätzlich eine Vorrichtung notwendig, welche die überlappenden Enden eines zu einer Hülse gewikkelten Blattes verschweisst. Diese Schweissnaht ist aber auch beim fertigen Gegenstand sichtbar. Wenn beim Blasvorgang die Schweissnaht reisst, so wird das Druckbild schlecht angebracht, und es entsteht Ausschuss.

Bei der Vorrichtung gemäss der US-A-2 792 593 wird analog zum Verfahren gemäss der vorher besprochenen DE-A-1 786 133 ein als Dekoration oder Verstärkung dienender Ring aus thermoplastischem Material über den kalten Vorformling geschoben, der sich auf einem Blasdorn befindet. Nachher werden Vorformling und Ring zusammen auf Blastemperatur erwärmt und zu einer Flasche geblasen. Auch dieses Verfahren hat daher den Nachteil eines hohen Energiebedarfes. Des weiteren können auch bei diesem Verfahren nur ring- oder hülsenförmige Gegenstände zur Dekoration oder Verstärkung verwendet werden.

Der Erfindung liegt die Aufgabe zugrunde, ein Verfahren zu schaffen, das das Anbringen von blattförmigen Gegenständen, z.B. Etiketten aus Papier oder Kunststoff, bei der Herstellung von Hohlkörpern aus Kunststoff erlaubt, ohne dass die Blaszykluszeit erhöht und die Auftrag- oder Etikettierfläche begrenzt wird. Gemäss der Erfindung wird dies bei einem Verfahren der eingangs erwähnten Art dadurch erreicht, dass der Gegenstand in Form eines Blattes an den sich in warm verformbarem Zustand befindlichen Rohling angedrückt wird.

Bei Maschinen, wo der Rohling in Form eines Schlauchstücks extrudiert wird, kann die Erfindung den Umstand ausnützen, dass zwischen dem Beginn des Extrusionsvorgangs bis zum Zeitpunkt, wo der extrudierte Schlauchabschnitt die notwendige Länge zur Herstellung eines Behälters erreicht, mehrere Sekunden vergehen. In dieser Zeit kann eine Relativbewegung zwischen dem blattförmigen Gegenstand und dem Schlauchabschnitt bewirkt werden, um ein leichtes Andrücken des blattförmigen Gegenstandes an die noch plastische Schlauchwandung zu bewirken. Dadurch wird der blattförmige Gegenstand an der Schlauchwandung befestigt. Da der Schlauch unmittelbar nach der Extrusion seine höchste Temperatur aufweist, ist damit auch die beste Voraussetzung für ein gutes Anhaften des blattförmigen Gegenstandes an der noch klebrigen Oberfläche des Schlauches gegeben.

Von besonderer Bedeutung ist aber, dass das erfindungsgemässe Verfahren eine grosse Freiheit bei der Anbringung des blattförmigen Gegenstandes bietet, denn es sind keine durch den Formenbau bedingte Begrenzungen der Auftrag- oder Etikettierflächen zu beachten. Weil keine Fenster in der Form vorgesehen werden müssen, fallen auch die damit verbundenen Nachteile, wie beschränkte Anbringungs- oder Etikettierflächen, verminderte Kühlung, erhöhte Formkosten, weg. Die grosse Freiheit in der Anbringung des blattförmigen Gegenstandes erlaubt es auch, z.B. verschiedene Etiketten an verschiedenen Orten des Hohlkörpers anzubringen. So können beispielsweise Etiketten auf zwei einander gegenüberliegenden Seiten einer Flasche angebracht werden.

Der blattförmige Gegenstand kann andere oder zusätzlich andere Funktionen als eine Etikette aufweisen. Dank der innigen Verbindung mit der Wandung des Hohlkörpers wird auch eine Verstärkung dieser Wandung erreicht. Das erfindungsgemässe Verfahren hat daher auch den Vorteil, dass unter gewissen Umständen durch die Anbringung des blattförmigen Gegenstandes die Wandungsstärke des Hohlkörpers dünner gehalten werden kann, weil nachträglich eine Verstärkung durch den blattförmigen Gegenstand erfolgt. Dies führt dann zu einer Materialeinsparung.

Gemäss einer vorteilhaften Weiterbildung des erfindungsgemässen Verfahrens erfolgt das Andrücken erst, wenn der Rohling unter dem Druck eines in seinem Inneren wirkenden Gases steht. In diesem Falle ist also zur Zeit des Andrückens der Hohlkörper seiner endgültigen Form bereits näher als im Schlauchstadium, so dass keine grossen Dehnungskräfte auf den blattförmigen Gegenstand wirken.

Zweckmässigerweise wird der blattförmige Gegenstand an den Rohling gedrückt, wenn dieser noch an der Extrusionsdüse oder einer Haltevorrichtung hängt. In der Nähe der Extrusionsdüse ist meist auch genügend Platz vorhanden, um eine entsprechende Vorrichtung zum Bereithalten und Andrücken vorzusehen. Ein weiterer Vorteil besteht darin, dass die Temperatur des Rohlings in diesem Moment noch am grössten ist und somit der blattförmige Gegenstand am besten haftet.

Das Auftragen des blattförmigen Gegenstandes kann während dem Extrudieren eines Schlauchstücks erfolgen. Es braucht dann nur dafür gesorgt zu werden, dass sich der blattförmige Gegenstand im Moment des Anpressens in praktisch der gleichen Richtung wie das Schlauchstück bewegt. Ein Vorteil dieser Verfahrensweise besteht darin, dass überhaupt keine zusätzliche Zeit zum Etikettieren benötigt wird und die Etikettiervorrichtung in keiner Weise andere Vorrichtungen behindert.

In vielen Fällen ist es vorteilhaft, wenn vor dem Andrücken das freie Schlauchende verschlossen und das Schlauchstück soweit aufgeblasen wird, bis seine Oberfläche eine zum Auftragen des blattförmigen Gegenstandes, z.B. einer Etikette, günstige Ausdehnung aufweist. Es ist dann auch möglich, dass der blattförmige Gegenstand nur mit einer kleinen Fläche des Rohlings verbunden wird und die vollständige Befestigung des blattförmigen Gegenstandes mit dem Hohlkörper erst im nachfolgenden Blasvorgang in der Form erfolgt. Es besteht dann keine Gefahr, dass die Etikette übermässig gestreckt wird.

In vielen Fällen ist es vorteilhaft, wenn mehrere blattförmige Gegenstände an einem Hohlkörper angebracht werden. Dies war bisher praktisch nicht möglich, weil an einer Form nicht beliebig viele Fenster angebracht werden konnten.

Die Erfindung betrifft auch eine Vorrichtung zur Durchführung des Verfahrens. Diese Vorrichtung ist dadurch gekennzeichnet, dass sie mindestens eine Vereinzelungs- und Zufuhreinrichtung aufweist, welche einen Greifer besitzt, der vor jeder Zufuhr eines Rohlings zur Blasform einen einzelnen blattförmigen Gegenstand bereithält und bei einer Relativbewegung zwischen Einrichtung und in warmverformbarem Zustand befindlichen Rohling den blattförmigen Gegenstand an diesem aufträgt. Diese Vorrichtung ist einfach in der Herstellung und lässt sich leicht an bestehenden Blasmaschinen montieren.

Zweckmässigerweise besitzt der Greifer einen Vakuumkopf zum Ergreifen und Halten des blattförmigen Gegenstandes. Ein Vakuumkopf weist eine hohe Betriebssicherheit auf.

Zweckmässigerweise ist der Greifer bei der Extrusionsdüse oder der Haltevorrichtung angeordnet. Beim Verlassen der Extrusionsdüse ist der Rohling noch sehr heiss, und daher besitzt die Etikette eine grosse Haftfähigkeit.

Vorteilhaft ist der Greifer in einem spitzen Winkel oder parallel zur Achse der Extrusionsdüse angeordnet, um den blattförmigen Gegenstand während des Andrückens in praktisch der gleichen Richtung wie der Rohling bei der Extrusion zu bewegen. Diese Anordnung hat sich sehr bewährt und gestattet eine gute Ausnützung der Extrusionszeit für die Etikettierung.

Ausführungsbeispiele der Erfindung werden nun unter Bezugnahme auf die Zeichnungen beschrieben. Es zeigt:

Fig. 1 die Herstellung und Etikettierung einer Flasche auf einer Blasmaschine, wobei die Etikettiervorrichtung bereit ist, eine Etikette an den Rohling anzubringen, währenddem gleichzeitig in der Form eine Flasche fertig geblasen wird,

Fig. 2 die Blasmaschine nach Fig. 1 im Moment, wo die Etikette am Rohling angebracht wird und die Flasche in der Form fertig geblasen ist,

Fig. 3 eine Blasmaschine wie in Fig. 2, wobei jedoch die Etikette während der Extrusion eines schlauchförmigen Rohlings an diesem angebracht wird.

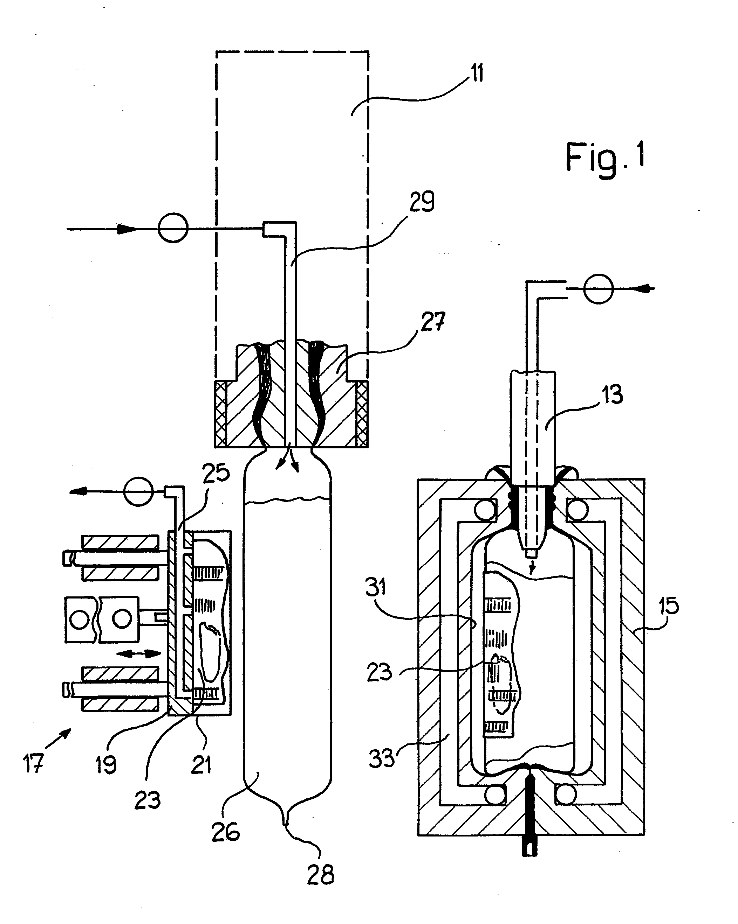

In Fig. 1 sind von der Blasmaschine der Schlauchkopf 11, der Blasdorn 13 und die Form 15 ersichtlich. Mit dem Bezugszeichen 17 wird die schematisch dargestellte Vorrichtung zum Anbringen von flachen Gegenständen, z.B. Etiketten, bezeichnet. Diese Vorrichtung besteht im wesentlichen aus einem Greifer 19, der einen Vakuumkopf 21 zum Ergreifen und Halten eines blattförmigen Gegenstandes 23 aufweist. Mit dem Bezugszeichen 25 ist die Vakuumleitung bezeichnet, an welche ein Vakuum angelegt wird, um einen einzelnen blattförmigen Gegenstand 23 zu ergreifen, wobei dann das Vakuum so lange aufrecht erhalten wird, bis die Etikette 23 den Rohling 26 berührt.

Der in Fig. 1 dargestellte Rohling 26 ist aus der Düse 27 extrudiert und dann unten bei 28 durch Zusammenquetschen verschlossen worden. Durch die Leitung 29 wurde der Rohling 26 mit einem Treibgas, z.B. Druckluft, aufgeblasen, bis er die eingezeichnete Form erreichte, deren Durchmesser grösser ist als der Düsendurchmesser.

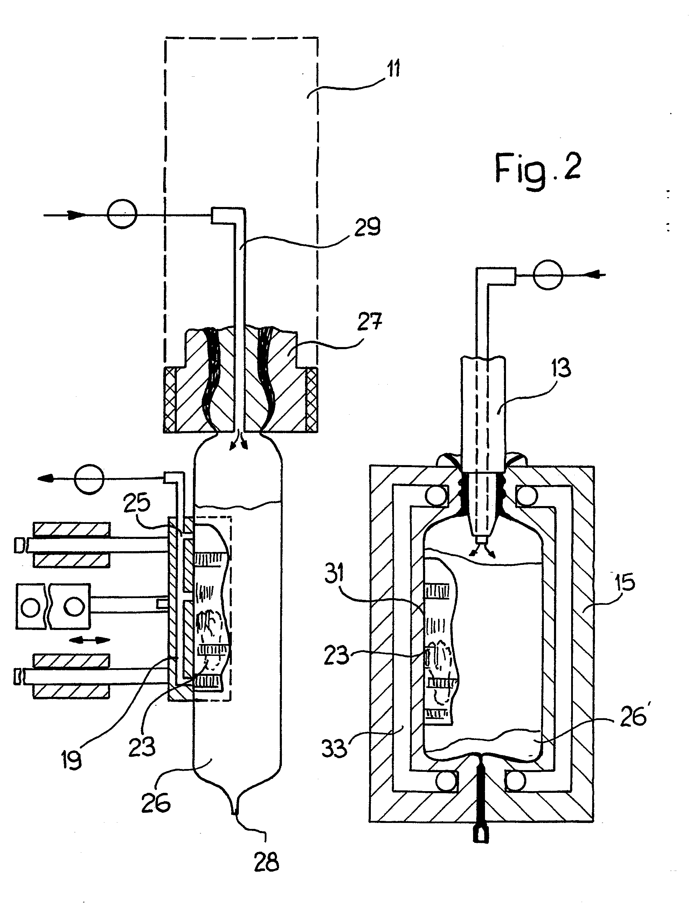

In Fig. 1 wurde in die Blasform 15 kurz vorher ein Rohling 26 eingeführt und der Blasdorn 13 hat gerade damit begonnen, die Flasche 26' zu blasen. Die fertig geblasene Flasche 26' ist in Fig. 2 ersichtlich. Beim Blasen wird die Etikette 23 gegen die Forminnenwandung 31 gepresst, so dass sie überall fest mit dem unter Druck stehenden Flaschenmantel in Berührung kommt und mit diesem fest verbunden wird. Die Form 15 weist Kühlkanäle 33 auf, welche die noch heisse Flasche 26' abkühlen.

Wie Fig. 2 weiter zeigt, wird während der Zeit, wo die Flasche 26' in der Form 15 geblasen wird, der Greifer 19 gegen den Rohling 26 bewegt, um dort die Etikette 23 anzudrücken. Der Greifer 19 wird dann wieder in die ursprüngliche Position zurückgeführt, so dass nach dem Öffnen der Form 15 und der Entnahme der fertigen Flasche 26' der neu geformte Rohling 26 zusammen mit der Etikette 23 in die Form 15 gebracht werden kann.

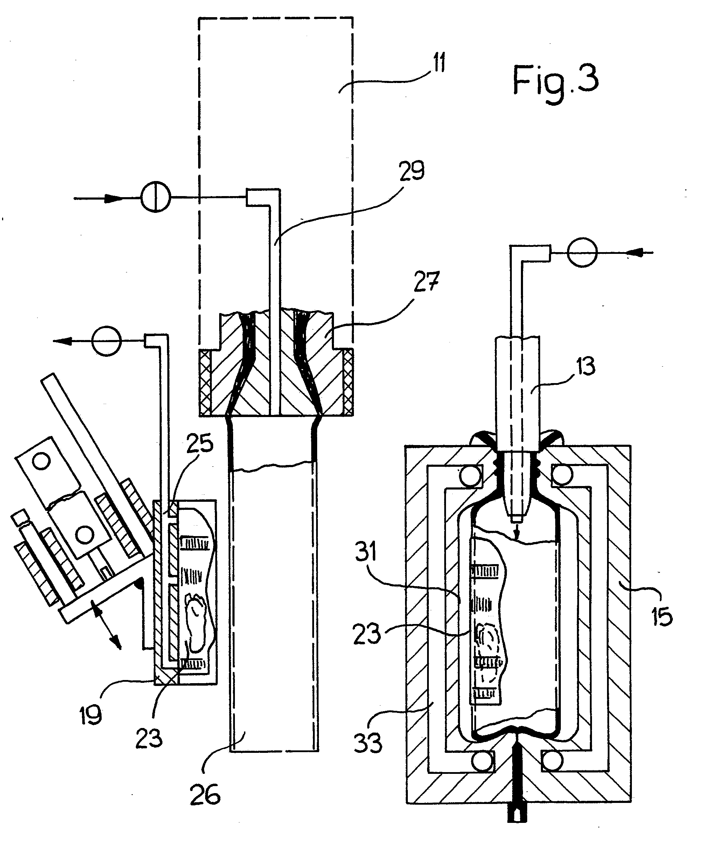

Bei dem in Fig. 3 dargestellten Ausführungsbeispiel der Erfindung wird die Etikette 23 während der Extrusion des Schlauchstücks 26 angebracht. Zu diesem Zwecke ist der Greifer 19 in einem spitzen Winkel zur Achse der Extrusionsdüse 27 angeordnet. Infolgedessen bewegt sich die Etikette 23 während des Andrückens praktisch in der gleichen Richtung wie der Rohling 26 bei der Extrusion. Im übrigen arbeitet die Blasmaschine in gleicher Weise wie vorher beschrieben. Da aber der Rohling 26 vor dem Überführen in die Form 15 nicht aufgeblasen wird, wird ihm über die Leitung 29 auch kein Treibgas zugeführt.

**Patentansprüche**

1. Verfahren zur Anbringung eines Gegenstandes (23) auf einen Hohlkörper (26') aus Kunststoff, bei welchem Verfahren der Gegenstand (23) am Rohling (26) für den zu blasenden Hohlkörper (26') angebracht wird, bevor dieser in die Blasform (15) eingeführt wird, dadurch gekennzeichnet, dass der Gegenstand in Form eines Blattes an den sich in warm verformbarem Zustand befindlichen Rohling (26) angedrückt wird.

2. Verfahren nach Anspruch 1, dadurch gekennzeichnet, dass das Andrücken erfolgt, wenn der Rohling (26) unter dem Druck eines in seinem Innern wirkenden Gases steht.

3. Verfahren nach Anspruch 1 oder 2, dadurch gekennzeichnet, dass der blattförmige Gegenstand (23) an den Rohling (26) gedrückt wird, wenn dieser an der Extrusionsdüse (27) oder einer Haltevorrichtung hängt.

4. Verfahren nach Anspruch 3, dadurch gekennzeichnet, dass das Auftragen des blattförmigen Gegenstandes während des Extrudierens des Schlauchstücks (26) erfolgt.

5. Verfahren nach einem der Ansprüche 1 bis 4, dadurch gekennzeichnet, dass vor dem Andrücken das freie Schlauchende (28) verschlossen und das Schlauchstück (26) soweit aufgeblasen wird, bis seine Oberfläche eine zum Auftragen des blattförmigen Gegenstandes (23) günstige Ausdehnung aufweist.

6. Verfahren nach einem der Ansprüche 1 bis 5, dadurch gekennzeichnet, dass der blattförmige Gegenstand (23) nur mit einer kleinen Fläche des Rohlings (26) verbunden wird, und dass die vollständige Befestigung des blattförmigen Gegenstandes mit dem Hohlkörper (26') erst im nachfolgenden Blasvorgang in der Form (15) erfolgt.

7. Verfahren nach einem der Ansprüche 1 bis 6, dadurch gekennzeichnet, dass mehrere blattförmige Gegenstände an einem Hohlkörper angebracht werden.

8. Vorrichtung zur Durchführung des Verfahrens nach einem der Ansprüche 1 bis 7, dadurch gekennzeichnet, dass sie mindestens eine Vereinzelungs- und Zufuhreinrichtung (17) aufweist, welche einen Greifer (19) besitzt, der vor jeder Zufuhr eines Rohlings (26) zur Blasform (15) einen einzelnen blattförmigen Gegenstand (23) bereithält und bei einer Relativbewegung zwischen Einrichtung und in warmverformbarem Zustand befindlichen Rohling den blattförmigen Gegenstand an diesem aufträgt.

9. Vorrichtung nach Anspruch 8, dadurch gekennzeichnet, dass der Greifer (19) einen Vakuumkopf (21) zum Ergreifen und Halten des blattförmigen Gegenstandes (23) besitzt.

10. Vorrichtung nach Anspruch 8 oder 9, dadurch gekennzeichnet, dass der Greifer (19) bei der Extrusionsdüse (27) oder der Haltevorrichtung angeordnet ist.

11. Vorrichtung nach Anspruch 10, dadurch gekennzeichnet, dass der Greifer (19) in einem spitzen Winkel oder parallel zur Achse der Extrusionsdüse (27) angeordnet ist, um den blattförmigen Gegenstand (23) während des Andrückens praktisch in der gleichen Richtung wie den Rohling (26) bei der Extrusion zu bewegen.

## Claims

1. Method of attaching an object (23) to a hollow body (26') of plastics, said method comprising, prior to insertion into the blow mould of the unfinished piece (26) for the hollow body (26') to be blown, attaching the object (23) on said unfinished piece (26), characterized in that the object (23) in form of a sheet is pressed against the unfinished piece (26) being in a thermoplastic state.

2. Method as in claim 1, characterized in that the application takes place when said unfinished piece (26) is under pressure of gas in its interior.

3. Method as in claim 1 or 2, characterized in that the sheetlike object (23) is pressed against the unfinished piece (26) when said unfinished piece (26) hangs on the extrusion nozzle (27) or a holding device.

4. Method as in claim 3, characterized in that the application of the sheetlike object (23) takes place during extrusion of a piece of tube (26) constituting said unfinished piece.

5. Method as in one of the claims 1 to 4, characterized in that, prior to pressing the sheetlike object (23) against the piece of tube (26), the free end (28) of the tube (26) is closed and the piece of tube is blown up until its surface has the favorable size for attaching the sheetlike object (23).

6. Method as in one of the claims 1 to 5, characterized in that the sheetlike object (23) is connected only to a small surface area of the unfinished piece (26), and in that the complete attachement of the sheetlike object to the hollow body (26') takes place only in the following blowing operation in the mould (15).

7. Method as in one of the claims 1 to 6, characterized in that several sheetlike objects (23) are attached to a hollow body (26).

8. Device for carrying out the method of one of the claims 1 to 7, characterized in that it comprises at least one feeding device (17) having a gripper (19) which, prior to the feeding of an unfinished piece (26) to the blow mould (15), keeps a sheetlike object (23) ready and, during a relative motion between the feeding device (17) and the unfinished piece (26), presses the sheetlike object (23) against the unfinished piece (26), which is in a thermoplastic condition.

9. Device as in claim 8, characterized in that the gripper (19) has a suction head (21) to grip and hold the sheetlike object (23).

10. Device as in claims 8 or 9, characterized in that the gripper (19) is located near the extrusion nozzle (27) or near the holding device.

11. Device as in claim 10, characterized in that the gripper (19) is located in an acute angle or parallel to the axis of the extrusion nozzle (27) to move the sheetlike object (23), during pressing it against the unfinished piece (26), in the same direction as the unfinished piece (26) moves during extrusion.

## Revendications

1. Procédé pour fixer un objet (23) sur un corps creux (26') en matière plastique, procédé dans lequel l'objet (23) est mis en place sur l'ébauche (26) du corps creux à souffler (26') avant que celle-ci ne soit introduite dans le moule de soufflage (15), caractérisé en ce que l'objet sous forme d'une feuille est appliqué sous pression contre l'ébauche (26) qui se trouve dans l'état déformable à chaud.

2. Procédé selon la revendication 1, caractérisé en ce que l'application sous pression est effectuée alors que l'ébauche (26) est sous la pression d'un gaz qui agit intérieurement sur elle.

3. Procédé selon la revendication 1 ou 2, caractérisé en ce que l'objet en forme de feuille (23) est pressé contre l'ébauche (26) alors que celle-ci est suspendue à la filière d'extrusion (27) ou à un dispositif de retenue.

4. Procédé selon la revendication 3, caractérisé en ce que l'application de l'objet en forme de feuille est effectuée pendant l'extrusion du morceau de gaine (26).

5. Procédé selon l'une quelconque des revendications 1 à 4, caractérisé en ce qu'avant l'application sous pression, l'extrémité libre (28) de la gaine est fermée et le morceau de gaine (26) est gonflé jusqu'à ce que sa surface présente une étendue propice à l'application de l'objet en forme de feuille (23).

6. Procédé selon l'une quelconque des revendications 1 à 5, caractérisé en ce que l'objet en forme de feuille (23) n'est fixé qu'à une petite surface de l'ébauche (26), et en ce que la fixation complète de l'objet en forme de feuille au corps creux (26') n'est effectuée que lors de l'opération subséquente de soufflage dans le moule (15).

7. Procédé selon l'une quelconque des revendications 1 à 6, caractérisé en ce que plusieurs objets en forme de feuille sont fixés sur un corps creux.

8. Dispositif pour l'exécution du procédé selon l'une quelconque des revendications 1 à 7, caractérisé en ce qu'il présente au moins un dispositif de déliassage et d'alimentation (17) comportant un preneur (19) qui, avant chaque arrivée d'une ébauche (26) dans le moule de soufflage (15), tient prêt un objet en forme de feuille individuel (23) et, lors d'un mouvement relativ entre ce dispositif et l'ébauche qui se trouve dans l'état déformable à chaud, applique l'objet en forme de feuille sur cette ébauche.

9. Dispositif selon la revendication 8, caractérisé en ce que le preneur (19) comporte une tête à dépression (21) pour saisir et maintenir l'objet en forme de feuille (23).

10. Dispositif selon la revendication 8 ou 9, caractérisé en ce que le preneur (19) est disposé à proximité de la filière d'extrusion (27) ou du dispositif de retenue.

11. Dispositif selon la revendication 10, caractérisé en ce que le preneur (19) est disposé sous un angle aigu ou parallèlement par rapport à l'axe de la filière d'extrusion (27), afin que pendant son application sous pression, l'objet en forme de feuille (23) soit déplacé pratiquement dans la même direction que l'ébauche (26) lors de son extrusion.

0 098 351

Fig.1

Fig. 2

Fig.3